# EUROPÄISCHE PATENTSCHRIFT

(11) **EP 2 108 631 B1**
(45) Veröffentlichungstag und Bekanntmachung des Hinweises auf die Patenterteilung: **13.11.2013**
(21) Anmeldenummer: 09154279.5
(22) Anmeldetag: 04.03.2009
(51) Int. Cl.: C04B 35/573, C04B 38/06, F01N 3/022, C04B 35/634

(54) **Copolyamidpulver als Porenbildner in regenerierbaren keramischen Partikelfiltern**
Copolyamide powder as pore-forming agent in regenerating ceramic particles filters
Poudre de copolyamide en tant qu'agent porogène dans des filtres à particules céramiques régénérables

(30) Priorität: 11.04.2008 DE 102008001125
(43) Veröffentlichungstag der Anmeldung: 14.10.2009
(73) Patentinhaber: Evonik Degussa GmbH, 45128 Essen (DE)
(72) Erfinder: Risthaus, Martin, 46286 Dorsten (DE); Wönicker, Hans-Joachim, 70565 Stuttgart (DE)

(56) Entgegenhaltungen:
- EP-A1- 1 741 685
- DE-A1- 19 753 249
- US-A- 5 707 065
- HAO WANG ET AL: 'Fabrication and characterization of ordered macroporous PMS-derived SiC from a sacrificial template method' JOURNAL OF MATERIALS CHEMISTRY Bd. 14, Nr. 9, 01 Januar 2004, Seite 1383, XP055005825 DOI: 10.1039/b313405a ISSN: 0959-9428

## Beschreibung

Mit der Einführung der EURO V-Norm und der Selbstverpflichtung der deutschen Automobilindustrie, ab 2008 in jedem neuen Dieselfahrzeug einen Filter einzusetzen, ergibt sich ein enormer Bedarf an solchen Filtersystemen. Ebenfalls findet zunehmender Einsatz von Dieselpartikelfiltern im Offroad-Bereich statt.

Partikel im Dieselabgas bestehen hauptsächlich aus Ruß und unverbrannten Kohlenwasserstoffen. Abhängig vom verwendeten Motor liegen die Rußpartikelgrößen schwerpunktmäßig im Bereich von etwa 50-100 µm und werden an der Oberfläche des Filters adsorbiert, bis sie im Anschluss nach entsprechender Belegung regeneriert werden.

Als funktionsfähiger Filterwerkstoff für die speziellen Einsatzbedingungen in Dieselfiltern hat sich Siliziumcarbid etabliert. Heutige Rußpartikelfilter werden entweder durch Extrusion von SiC-Pulver und anschließender Rekristallisation oder direkt aus den Einzelkomponenten Silizium und Kohlenstoff gefertigt. Die Silizierungstemperaturen liegen hierbei zwischen 1500 und 2300 °C. Der Partikelfilter kann ohne Probleme hoch beladen und dann thermisch abgebrannt werden, wobei im Teillastbetrieb Abgas mit hohem Sauerstoffanteil auf den 600 °C warmen Filter gelangt und die angesammelten Partikel thermisch abbaut.

Nach der DE 197 53 249 wird ein Keramiknetzwerk hergestellt, bei dem zunächst aus Polymerfasern und/oder Naturfasern ein Fasernetzwerk hergestellt wird. Das Fasernetzwerk wird anschließend mit einer Keramiksuspension getränkt. Danach wird dieses Netzwerk bei hohen Temperaturen weiter behandelt.

Nach US-A-5 707 645 werden Sinterkörper aus Siliciumcarbid hergestellt, die als Gleitringe eingesetzt werden können. Gleitringe sind, im Gegensatz zu Abgasfiltern, hohen mechanischen Kräften ausgesetzt, deshalb sollte die Porosität der Gleitringe bestimmte Werte nicht überschreiten.

Zur Steigerung der Filterleistung der eingesetzten Dieselpartikelfilter ist es notwendig eine möglichst große Oberfläche anzubieten, an der sich die Rußpartikel anlagern können. Durch den bisher zum Einsatz gekommenen Extrusionsprozess konnte eine relativ poröse Oberfläche geschaffen werden, die jedoch keine optimalen Adsorptionseigenschaften zeigte.

Es wurde nun überraschend gefunden, dass durch ein Verfahren, wie in den Ansprüchen beschrieben, stark verbesserte Partikelfilter hergestellt werden können.

Fügt man der Extrusionsmasse aus SiC eine gewisse Menge von 5 bis 15 Gew.-% eines Copolyamid-Pulvers zu und brennt dieses Polymer nach der Extrusion bei ca. 350 °C wieder aus, so entsteht eine Filterstruktur mit deutlich verbesserten Filtereigenschaften durch enorme Erhöhung der BET auf Werte >350 m²/l bis etwa 800 m²/l. Es werden Copolyamid-Pulver eingesetzt, die eine Pulverteilchengrößenverteilung zwischen 0 und 80 µm aufweisen. Durch das Ausbrennen der polymeren Anteile wird die Oberflächenstruktur der SiC-Masse deutlich verändert, es bilden sich mehr Stege und Kanäle innerhalb der monolithen SiC-Struktur, die die Filterleistung steigern und somit den Wirkungsgrad der Filterpatrone verbessern. Durch die Einarbeitung des Polyamid-Pulvers und anschließender Pyrolyse kann der Abgasgegendruck aufgrund der beschriebenen Effekte deutlich gesenkt werden, was eine deutlich bessere Filterwirkung zur Folge hat.

Der keramische Formkörper wird für den Bestimmungszweck nach EP 1 741 685 A1 gefertigt und zeichnet sich durch die Verwendung einer Masse aus siliziumhaltigen Partikeln mit einer Korngröße von vorzugsweise 0,001 bis 190 µm in Kombination mit kohlenstoffhaltigen Partikeln mit einer Korngröße von vorzugsweise 0,001 bis 150 µm aus, die bei 600 bis 1000 °C pyrolisiert wird. Anschließendes Silizieren unter Sauerstoffausschluss bei vorzugsweise 1150 bis 1700 °C führt zu dem gewünschten SiC-Formkörper.

Die Masse weist nach der Silizierung eine innere Oberfläche von 300 bis 450 m²/g auf. Zugesetzt wird nun ein pulverförmiges Polymer aus Copolyamid basierend vorzugsweise auf Laurinlactam, Caprolactam, Dodecandisäure und Methylpentamethylendiamin. Das Copolyamid sollte eine Kornverteilung von 0 - 80 µm aufweisen, wobei vorzugsweise 35 - 40, insbesondere 40 - 60 % der Partikel <50 µm sein sollten. Der Schmelzpunkt des Polymers sollte <150 °C, vorzugsweise <120 °C und optimalerweise <110 °C liegen. VESTAMELT 730-P1 eignet sich besonders für diesen Einsatzzweck.

Durch den Zusatz des Polyamids im Mengenbereich von 5 - 15 %, vorzugsweise 7 - 10 %, vor der Pyrolyse, kann die innere Oberläche nach BET deutlich auf 600 bis 800 m²/g erhöht werden. Während der Pyrolyse wird das Copolyamid nahezu vollständig thermisch zersetzt und führt zur Ausbildung von Kanalwänden mit einer Wandstärke im Bereich von 100 - 480 µm, vorzugsweise 220 - 350 µm Dies führt zu einer ausreichenden Stabilität bei deutlich vergrößerter Oberfläche, was die Herstellung von deutlich kleineren Filtern ermöglicht. Gerade für den Abgasbereich von Diesel-Pkw ist es notwendig, Filter mit kleinerem Volumen bereitzustellen.
Die Reduzierung der Wandstärke durch den Einsatz des Copolyamids führt bereits bei einer Reduzierung um 70 µm und bei gleichzeitiger Erhöhung der Kanaldichte zur deutlichen Erhöhung der inneren Oberfläche des Filters bei gleichem Volumen.

Der poröse SiC-haltige keramische Formkörper eignet sich zur Verwendung in einem Filtersystem, beispielsweise im Abgassystem eines Kraftfahrzeugs oder einer Abgasbehandlungsanlage eines Verbrennungsmotors, in dem der poröse SiC-haltige keramische Formkörper angeordnet ist. Ebenfalls kann der keramische Formkörper als Katalysatorträgerstruktur sowie als entsprechendes Katalysatorsystem Verwendung finden. Beispielhaft hierfür sind Kraftfahrzeuge, Schiffsmotoren, Baufahrzeuge sowie Maschinen mit Verbrennungsmotor zu erwähnen, die systembedingt Feinstaub emittieren.

### Bespiel

Der für die Untersuchungen hergestellte Keramik-Formkörper wurde aus einer wässrigen Keramik-Slurry unter Verwendung von VESTAMELT 730-P1 Pulver in Anlehnung an EP 1 741 685 A1 gefertigt. Hierzu wurden siliziumhaltige Partikel mit einer Kornverteilung im Bereich von 0,001 bis 75 µm mit kohlenstoffhaltigen Partikeln, die eine Kornverteilung im Bereich von 0,001 bis 35 µm aufweisen, sowie mit Copolyamidpulver mit einer Kornverteilung von 0 bis 80 µm gemischt und bei 830°C pyrolysiert. Bereits hier findet die thermische Zersetzung des Copolyamidpulvers statt, so dass durch den Ausbrennprozess eine Erhöhung der inneren Oberfläche stattfindet. In dem hier vorliegenden Fall konnte die innere Oberfläche auf 780 m²/g nach BET erhöht werden. Anschließend wurde durch Silizierung bei 1450°C das Siliziumcarbid SiC ausgebildet, welches das endgültige Filtermaterial darstellt.

Folgende Materialzusammensetzung kam zum Einsatz:

| | |
|---|---|
| Aktivkohle | 8,9% |
| Siliziumpulver | 40,0% |
| VESTAMELT 730-P1 | 8,0% |
| Wasser | 24,0% |
| Phenolharz | 12,5% |
| Hilfsmittel | 6,6% |

## Patentansprüche

1. Verfahren zur Herstellung eines regenerierbaren, keramischen Partikelfilters für Dieselfahrzeuge,
**dadurch gekennzeichnet,**
**dass** eine Masse aus siliziumhaltigen Partikeln in Kombination mit kohlenstoffhaltigen Partikeln in Gegenwart von 5 bis 15 Gew.% eines Copolyamid-Pulvers, welches eine Pulverteilchengrößenverteilung zwischen 0 und 80 µm aufweist, pyrolisiert wird.

2. Verfahren zur Herstellung eines regenerierbaren, keramischen Partikelfilters für Dieselfahrzeuge,
**dadurch gekennzeichnet,**
**dass** eine Masse aus Siliciumcarbid in Gegenwart von 5 bis 15 Gew.% eines Copolyamid-Pulvers, welches eine Pulverteilchengrößenverteilung zwischen 0 und 80 µm aufweist, pyrolisiert wird.

3. Verfahren nach Anspruch 1 oder 2,
**dadurch gekennzeichnet,**
**dass** in Gegenwart von 7 bis 10 Gew.%, eines Copolyamid-Pulvers pyrolisiert wird.

4. Verfahren nach einem der vorhergehenden Ansprüche,
**dadurch gekennzeichnet,**
**dass** das Copolyamid-Pulver eine Pulverteilchengrößenverteilung zwischen 0 und 80 µm aufweist, wobei 35 - 40 Gew.% der Partikel < 50 µm sind.

5. Verfahren nach einem der vorhergehenden Ansprüche,
**dadurch gekennzeichnet,**
**dass** ein Copolyamid-Pulver basierend auf Laurinlactam, Caprolactam, Dodecandisäure und Methylpentamethylendiamin eingesetzt wird.

6. Verfahren nach einem der vorhergehenden Ansprüche,
**dadurch gekennzeichnet,**
**dass** das Copolyamid-Pulver einen Schmelzpunkt <150 °C aufweist.

7. Verfahren nach einem der vorhergehenden Ansprüche,
**dadurch gekennzeichnet,**
**dass** die Pyrolyse bei 600 bis 1000 °C stattfindet.

## Claims

1. Process for producing a regenerable ceramic particulate filter for diesel vehicles,
**characterized in that**
a material composed of silicon-containing particles in combination with carbon-containing particles is pyrolysed in the presence of 5 to 15% by weight of a copolyamide powder which has a powder particle size distribution in the range from 0 to 80 µm.

2. Process for producing a regenerable ceramic particulate filter for diesel vehicles,
**characterized in that**
a material composed of silicon carbide is pyrolysed in the presence of 5 to 15% by weight of a copolyamide powder which has a powder particle size distribution in the range from 0 to 80 µm

3. Process according to Claim 1 or 2,
**characterized in that**
the pyrolysis is effected in the presence of 7 to 10% by weight of a copolyamide powder.

4. Process according to any one of the preceding claims,
**characterized in that**
the copolyamide powder has a powder particle size distribution in the range from 0 to 80 µm, with 35-40% by weight of the particles < 50 µm.

5. Process according to any one of the preceding claims,
**characterized in that**
a copolyamide powder based on laurolactam, caprolactam, dodecanedioic acid and methylpentamethylenediamine is used.

6. Process according to any one of the preceding claims,
**characterized in that**
the copolyamide powder has a melting point of <150°C.

7. Process according to any one of the preceding claims,
**characterized in that**
the pyrolysis takes place at 600 to 1000°C.

## Revendications

1. Procédé pour la fabrication d'un filtre à particules céramique régénérable pour véhicules Diesel, **caractérisé en ce**
**qu'**on pyrolyse une masse de particules siliciées en association avec des particules carbonées, en présence de 5 à 15 % en poids d'une poudre de copolyamide qui présente une distribution de tailles de particules de poudre comprise entre 0 et 80 µm.

2. Procédé pour la fabrication d'un filtre à particules céramique régénérable pour véhicules Diesel, **caractérisé en ce**
**qu'**on pyrolyse une masse de carbure de silicium en présence de 5 à 15 % en poids d'une poudre de copolyamide qui présente une distribution de tailles de particules de poudre comprise entre 0 et 80 µm.

3. Procédé selon la revendication 1 ou 2, **caractérisé en ce**
**qu'**on effectue la pyrolyse en présence de 7 à 10 % en poids d'une poudre de copolyamide.

4. Procédé selon l'une quelconque des revendications précédentes,
**caractérisé en ce que**
la poudre de copolyamide présente une distribution de tailles de particules de poudre comprise entre 0 et 80 µm, 35 - 40 % en poids des particules ayant une taille < 50 µm.

5. Procédé selon l'une quelconque des revendications précédentes,
**caractérisé en ce**
**qu'**on utilise une poudre de copolyamide à base de lauryllactame, caprolactame, acide dodécanedioïque et méthylpentaméthylènediamine.

6. Procédé selon l'une quelconque des revendications précédentes,
**caractérisé en ce que**
la poudre de copolyamide présente un point de fusion < 150 °C.

7. Procédé selon l'une quelconque des revendications précédentes,
**caractérisé en ce que**
la pyrolyse a lieu à une température de 600 à 1 000 °C.
